# EUROPEAN PATENT APPLICATION

(11) **EP 4 726 343 A1**
(43) Date of publication of application: **15.04.2026**
(21) Application number: 25207962.9
(22) Date of filing: 10.10.2025
(51) Int. Cl.: G01K 7/22, G01K 1/143, G01K 1/08, G01K 1/18, H01M 10/48, H01R 4/48, H01R 11/05, H01R 12/67, H01R 13/115, G01K 7/16

(54) **TEMPERATURE MEASUREMENT MODULE AND TEMPERATURE ACQUISITION DEVICE**

(30) Priority: 11.10.2024 CN 202411419348
(71) Applicant: Tyco Electronics (Shanghai) Co., Ltd., Pilot Free Trade Zone Shanghai 200131 (CN)
(72) Inventor: Wang, Ke, Suzhou, 215121 (CN); Zhou, Xiao, Shanghai, 200233 (CN); He, Wei, Shanghai, 200233 (CN)
(74) Representative: Grünecker Patent- und Rechtsanwälte PartG mbB

(57) **Abstract**

The present invention discloses a temperature measurement module and a temperature acquisition device. The temperature measurement module comprises: a housing (1); and a temperature sensor (2) which is provided in the housing (1). The temperature sensor (2) has a pair of pins (21), which are used as mating terminals for mating with terminals (5) of an electrical connection module (200). In the present invention, the temperature measurement module and the electrical connection module are press fitted together in a detachable manner, allowing the temperature sensor in the temperature measurement module to be replaced separately, thereby reducing the maintenance cost of the temperature acquisition device.

## Description

### CROSS-REFERENCE TO RELATED APPLICATION

This application claims the benefit of Chinese Patent Application No. CN202411419348.4 filed on October 11, 2024 in the State Intellectual Property Office of China, the whole disclosure of which is incorporated herein by reference.

### BACKGROUND OF THE INVENTION

### Field of the Invention

The present invention relates to a temperature measurement module and a temperature acquisition device comprising the temperature measurement module.

### Description of the Related Art

In the prior art, the temperature acquisition device used to collect the temperature of the battery pack of electric vehicles usually includes a packaged NTC (Negative Temperature Coefficient) temperature sensor and a flexible flat cable (FFC) or flexible printed circuit board (FPC) electrically connected to the NTC temperature sensor. The NTC temperature sensor is welded to the bus bar of the battery pack or pasted onto the top cover of the battery pack, used to detect the temperature on the bus bar of the battery pack or the top cover of the battery pack. The flexible flat cable or the flexible printed circuit board transmits the detected temperature data to the electronic control unit.

In the prior art, the NTC temperature sensor is soldered or bonded together with FPC or FFC and cannot be separated. If maintenance is required, such as replacing the NTC temperature sensor, the entire FPC or FFC must be replaced at the same time, which results in higher maintenance costs.

### SUMMARY OF THE INVENTION

The present invention has been made to overcome or alleviate at least one aspect of the above mentioned disadvantages.

According to an aspect of the present invention, there is provided a temperature measurement module. The temperature measurement module comprises: a housing; and a temperature sensor which is provided in the housing. The temperature sensor has a pair of pins, which are used as mating terminals for mating with terminals of an electrical connection module.

According to an exemplary embodiment of the present invention, the pair of pins of the temperature sensor are adapted to be press fitted into a pair of terminals of the electrical connection module, respectively, to be electrically connected to the pair of terminals of the electrical connection module.

According to another exemplary embodiment of the present invention, the temperature sensor is a negative temperature coefficient thermistor temperature sensor.

According to another exemplary embodiment of the present invention, the housing has a transverse partition wall, which divides the inner cavity of the housing into a front chamber and a rear chamber, the main body of the temperature sensor is accommodated in the front chamber of the housing; a pair of through holes are formed in the transverse partition wall, and the pair of pins of the temperature sensor pass through the transverse partition wall through the pair of through holes and extend into the rear chamber of the housing.

According to another exemplary embodiment of the present invention, a mounting port connected to the front chamber is formed in the front wall of the housing, and the temperature sensor is detachably mounted into the housing through the mounting port.

According to another exemplary embodiment of the present invention, the front chamber of the housing has a top opening and a bottom opening; the temperature measurement module further comprises: an upper retaining body which is detachably installed into the front chamber of the housing from the top opening of the front chamber; and a lower retaining body which is detachably installed into the front chamber of the housing from the bottom opening of the front chamber. The main body of the temperature sensor is held between the upper retaining body and the lower retaining body, at least one of the upper retaining body and the lower retaining body is made of a thermal conductive material to be able to transfer the heat of a measured object to the temperature sensor.

According to another exemplary embodiment of the present invention, the upper retaining body is made of a thermally conductive material, which protrudes slightly from the top of the housing and is suitable for direct thermal contact with the measured object or thermal connection to the measured object via a thermally conductive adhesive; and/or the lower retaining body is made of a thermally conductive material, which protrudes slightly from the bottom of the housing and is suitable for direct thermal contact with the measured object or thermal connection to the measured object via a thermally conductive adhesive.

According to another exemplary embodiment of the present invention, an upper recess that matches the upper part of the main body of the temperature sensor is formed on the bottom of the upper retaining body, and a lower recess that matches the lower part of the main body of the temperature sensor is formed on the top of the lower retaining body; the upper recess and the lower recess are combined to form a receiving recess that matches the main body of the temperature sensor, and the main body of the temperature sensor is received and positioned in the receiving recess.

According to another exemplary embodiment of the present invention, an upper snap slot and a lower snap slot are respectively formed on two side walls of the front chamber of the housing; upper protrusions are respectively formed on both sides of the upper retaining body, and the upper protrusions are engaged with the upper snap slots to lock the upper retaining body in the front chamber of the housing; lower protrusions are respectively formed on both sides of the lower retaining body, and the lower protrusions are engaged with the lower slots to lock the lower retaining body in the front chamber of the housing.

According to another exemplary embodiment of the present invention, the upper retaining body and the lower retaining body are the same and can be used interchangeably.

According to another exemplary embodiment of the present invention, the temperature measurement module further comprises a thermal conductor which is injected into the front chamber of the housing to maintain the main body of the temperature sensor and transfer the heat of the measured object to the temperature sensor.

According to another exemplary embodiment of the present invention, snap slots are respectively formed on both side walls of the rear chamber of the housing, the snap slots are used to engage with elastic buckles on an insulation shell of an electrical connection module to lock the insulation shell of the electrical connection module in the rear chamber of the housing.

According to another exemplary embodiment of the present invention, the top portion and rear end of the rear chamber of the housing are open to allow the electrical connection module to be press fitted into the rear chamber of the housing from the top portion of the rear chamber of the housing downwards along the height direction of the housing.

According to another aspect of the present invention, there is provided a temperature acquisition device. The temperature acquisition device comprises: the above temperature measurement module; and an electrical connection module which is press fitted into the temperature measurement module. The electrical connection module comprises: an insulation shell; a pair of terminals which are detachably installed in the insulation shell; and an electrical connection member electrically connected to the pair of terminals and led out from the insulation shell. The pair of pins of the temperature sensor are respectively press fitted into the pair of terminals to be electrically connected to the pair of terminals.

According to another exemplary embodiment of the present invention, the terminal has a pair of elastic cantilevers located at its front end, and the pin of the temperature sensor is press fitted between the pair of elastic cantilevers of the terminal, the pair of elastic cantilevers clamp the pin to be electrically connected to it.

According to another exemplary embodiment of the present invention, the terminal has a crimping portion located at its rear end, which is crimped onto the electrical connection member to electrically connect with the electrical connection member.

According to another exemplary embodiment of the present invention, the electrical connection member is a flexible flat cable or a flexible printed circuit board.

According to another exemplary embodiment of the present invention, two terminal mounting slots are formed in the insulation shell and the bottom of the insulation shell is open to allow the pair of terminals to be respectively installed into the two terminal mounting slots from the bottom of the insulation shell.

According to another exemplary embodiment of the present invention, the electrical connection module further comprises a bottom cover which is detachably installed on the bottom of the insulation shell, a pair of slots are formed in the front wall of the insulation shell and the front end of the bottom cover to allow the pair of pins to enter the housing, and the pair of pins are respectively press fitted between the pair of elastic cantilevers of the terminal through the pair of slots.

According to another exemplary embodiment of the present invention, a locking slot is formed on the top wall of the insulation shell, and the terminal has a locking spring that is engaged into the locking slot to lock the terminal in the insulation shell.

According to another exemplary embodiment of the present invention, the elastic cantilever of the terminal has a hook shaped portion located at its end, and the hook shaped portions of the pair of elastic cantilevers of the terminal face each other for clamping the pin inserted between them.

According to another exemplary embodiment of the present invention, the insulation shell of the electrical connection module is adapted to be press fitted along the height direction from above the rear chamber of the housing of the temperature measurement module into the rear chamber of the housing of the temperature measurement module; elastic buckles are respectively formed on the two side walls of the insulation shell, and protrusions are respectively formed on the elastic buckles, the protrusions are respectively engaged with the snap slots on the side walls of the rear chamber of the housing to lock the insulation shell in the rear chamber of the housing.

According to another exemplary embodiment of the present invention, the temperature measurement module is used to detect the temperature of an electric vehicle battery pack, and the temperature acquisition device is used to collect temperature data of the electric vehicle battery pack, the temperature measurement module is in direct thermal contact with the bus bar or top cover of the electric vehicle battery pack or is thermally connected to the bus bar or top cover of the electric vehicle battery pack through a thermal conductive adhesive.

In the aforementioned exemplary embodiments according to the present invention, the temperature measurement module and the electrical connection module are press fitted together in a detachable manner, so that the temperature sensor in the temperature measurement module can be replaced separately, thereby reducing the maintenance cost of the temperature acquisition device.

### BRIEF DESCRIPTION OF THE DRAWINGS

The above and other features of the present invention will become more apparent by describing in detail exemplary embodiments thereof with reference to the accompanying drawings, in which:
Figure 1 shows an illustrative perspective view of a temperature acquisition device according to an exemplary embodiment of the present invention;
Figure 2 shows an illustrative exploded view of a temperature acquisition device according to an exemplary embodiment of the present invention;
Figure 3 shows an illustrative perspective view of the temperature measurement module of a temperature acquisition device according to an exemplary embodiment of the present invention;
Figure 4 shows an illustrative exploded view of the temperature measurement module of the temperature acquisition device according to an exemplary embodiment of the present invention;
Figure 5 shows another illustrative exploded view of the temperature measurement module of the temperature acquisition device according to an exemplary embodiment of the present invention;
Figure 6 shows a longitudinal sectional view of the temperature measurement module of a temperature acquisition device according to an exemplary embodiment of the present invention;
Figure 7 shows an exploded sectional view of the temperature measurement module of a temperature acquisition device according to an exemplary embodiment of the present invention;
Figure 8 shows an illustrative perspective view of the electrical connection module of a temperature acquisition device according to an exemplary embodiment of the present invention;
Figure 9 shows an illustrative exploded view of the electrical connection module of a temperature acquisition device according to an exemplary embodiment of the present invention;
Figure 10 shows another illustrative exploded view of the electrical connection module of the temperature acquisition device according to an exemplary embodiment of the present invention;
Figure 11 shows another illustrative exploded view of the electrical connection module of the temperature acquisition device according to an exemplary embodiment of the present invention;
Figure 12 shows an illustrative perspective view of the terminals and electrical connection members of the electrical connection module of the temperature acquisition device according to an exemplary embodiment of the present invention; and
Figure 13 shows an illustrative view of the pins of a temperature sensor pressed into terminals according to an exemplary embodiment of the present invention.

### DETAILED DESCRIPTION OF PREFERRED EMBODIMENTS OF THE IVENTION

Exemplary embodiments of the present disclosure will be described hereinafter in detail with reference to the attached drawings, wherein the like reference numerals refer to the like elements. The present disclosure may, however, be embodied in many different forms and should not be construed as being limited to the embodiment set forth herein; rather, these embodiments are provided so that the present disclosure will be thorough and complete, and will fully convey the concept of the disclosure to those skilled in the art.

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

According to a general concept of the present invention, there is provided a temperature measurement module. The temperature measurement module comprises: a housing; and a temperature sensor which is provided in the housing. The temperature sensor has a pair of pins, which are used as mating terminals for mating with terminals of an electrical connection module.

According to another general concept of the present invention, there is provided a temperature acquisition device. The temperature acquisition device comprises: the above temperature measurement module; and an electrical connection module which is press fitted into the temperature measurement module. The electrical connection module comprises: an insulation shell; a pair of terminals which are detachably installed in the insulation shell; and an electrical connection member electrically connected to the pair of terminals and led out from the insulation shell. The pair of pins of the temperature sensor are respectively press fitted into the pair of terminals to be electrically connected to the pair of terminals.

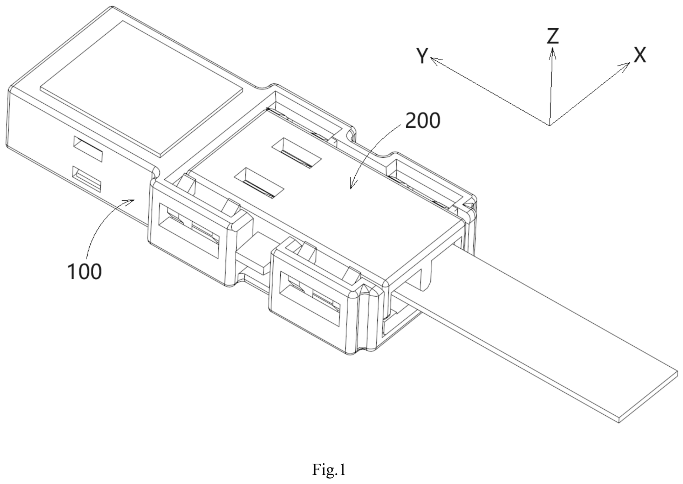

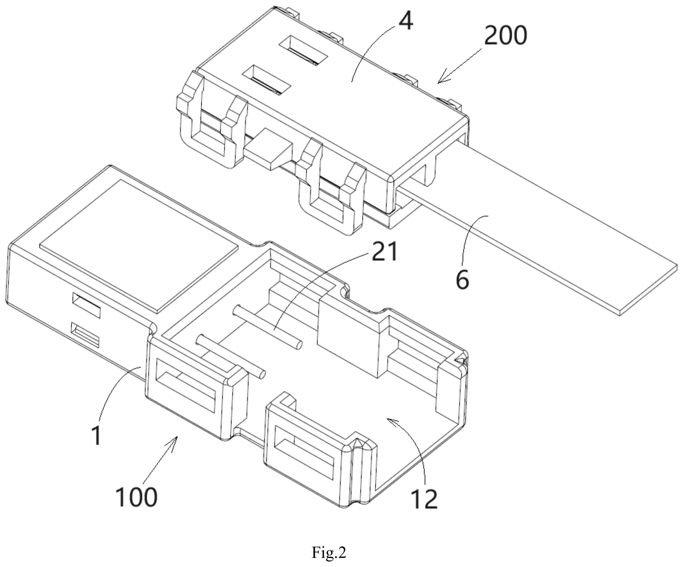

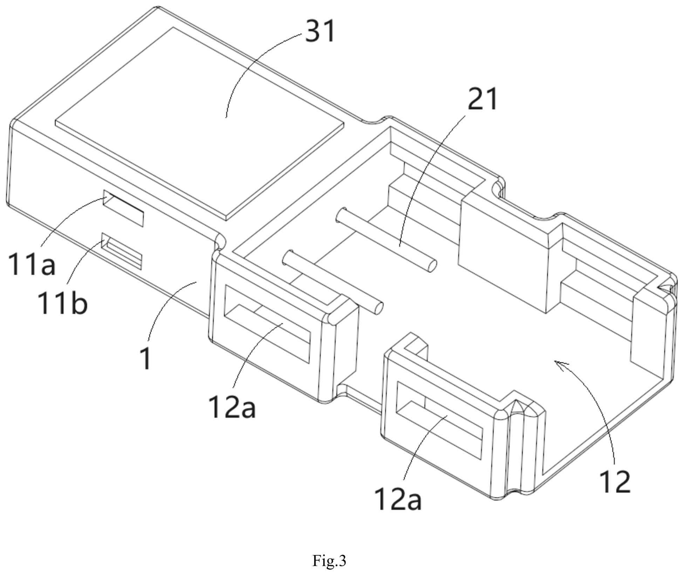

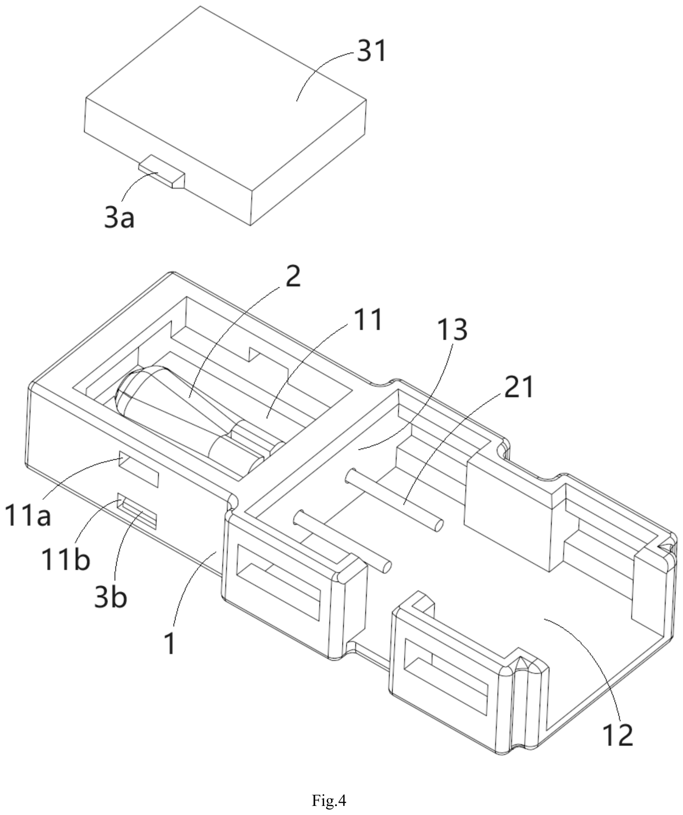

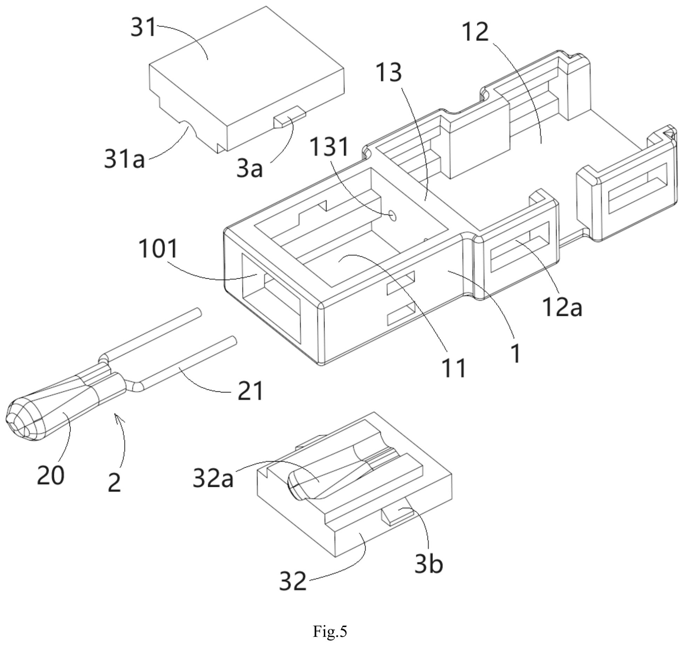

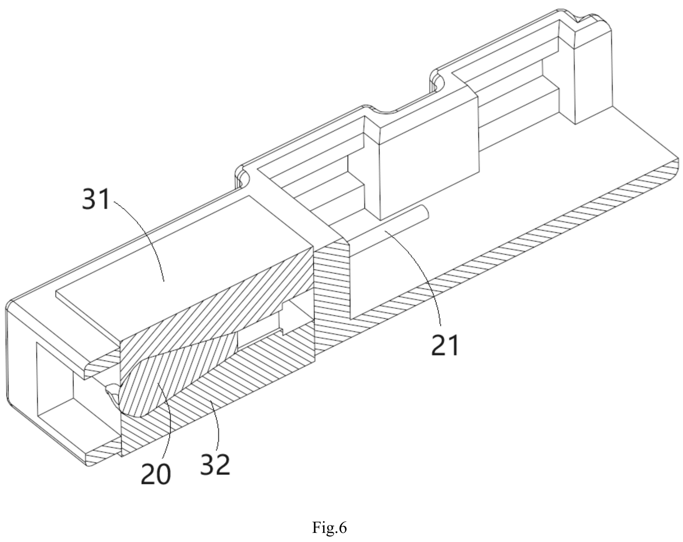

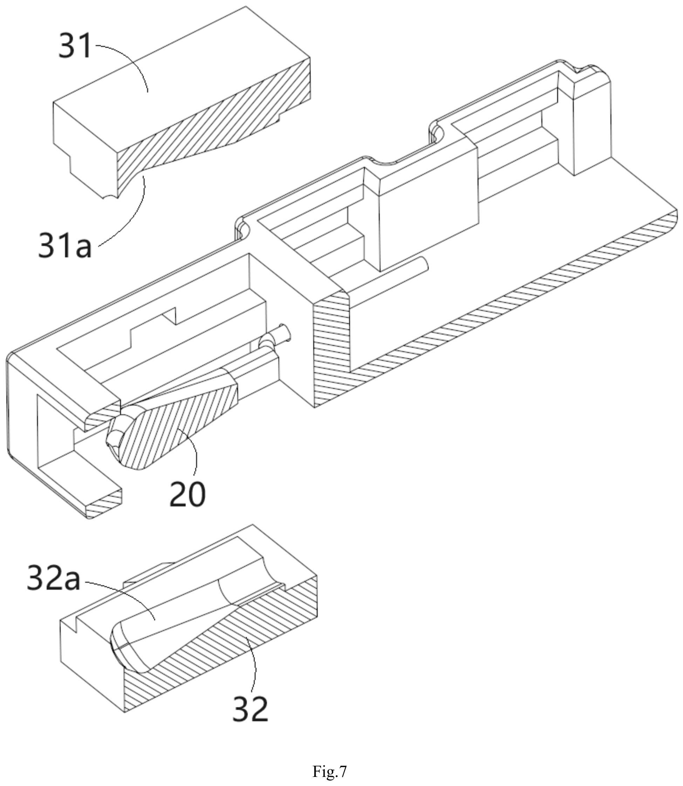

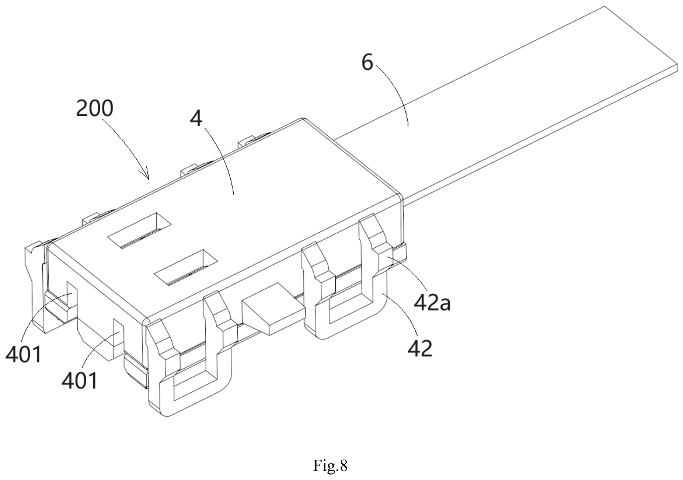

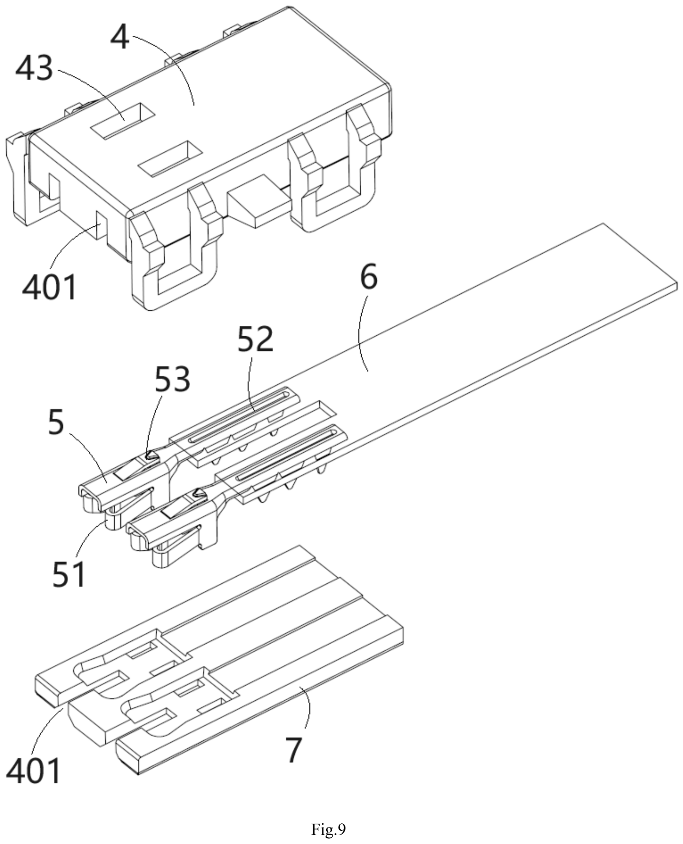

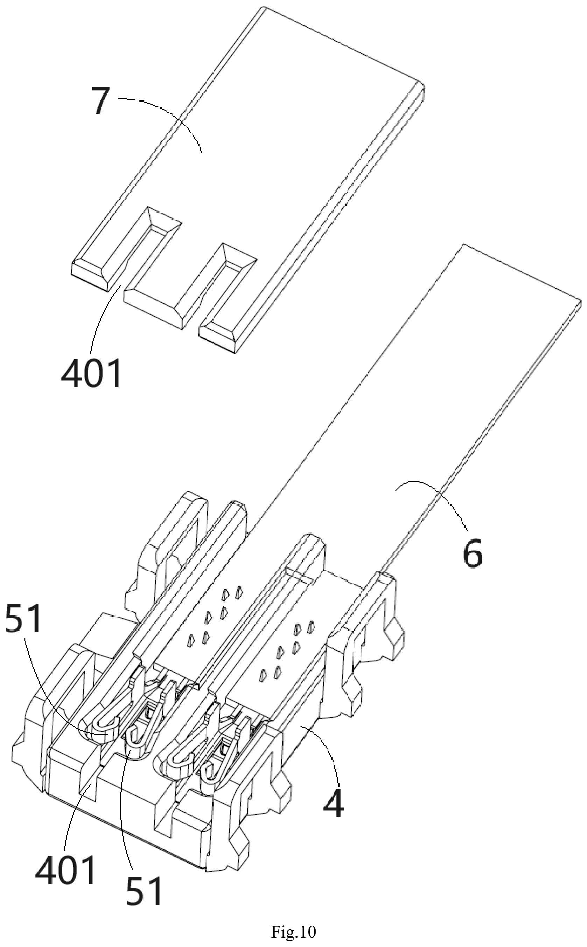

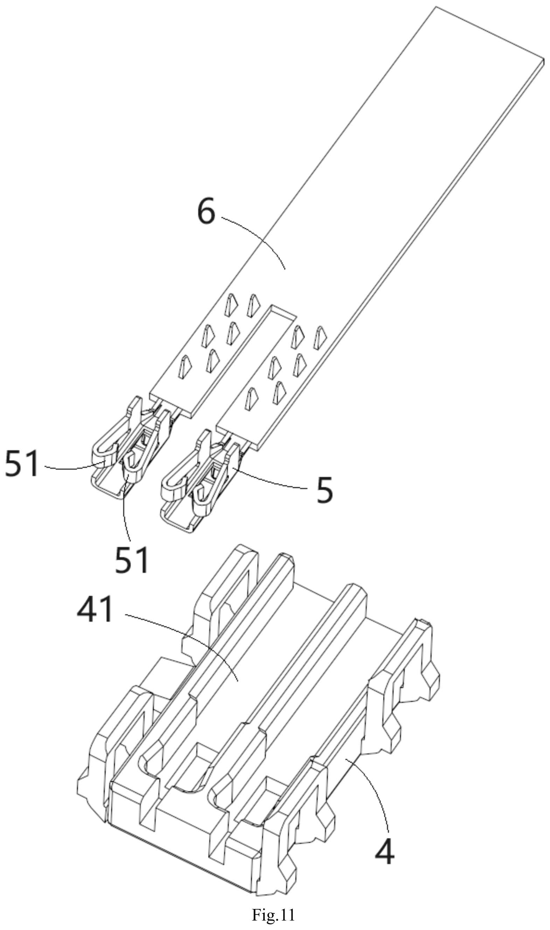

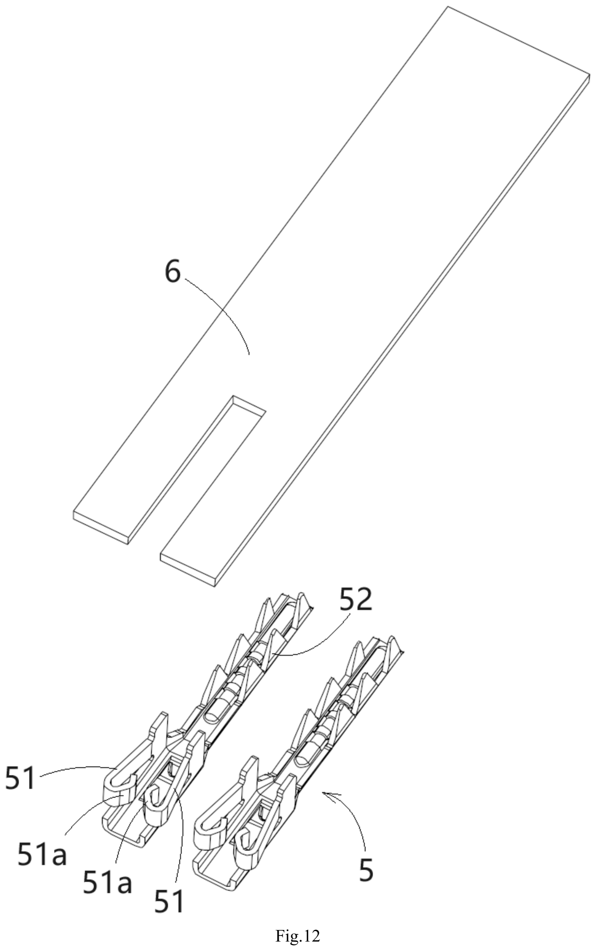

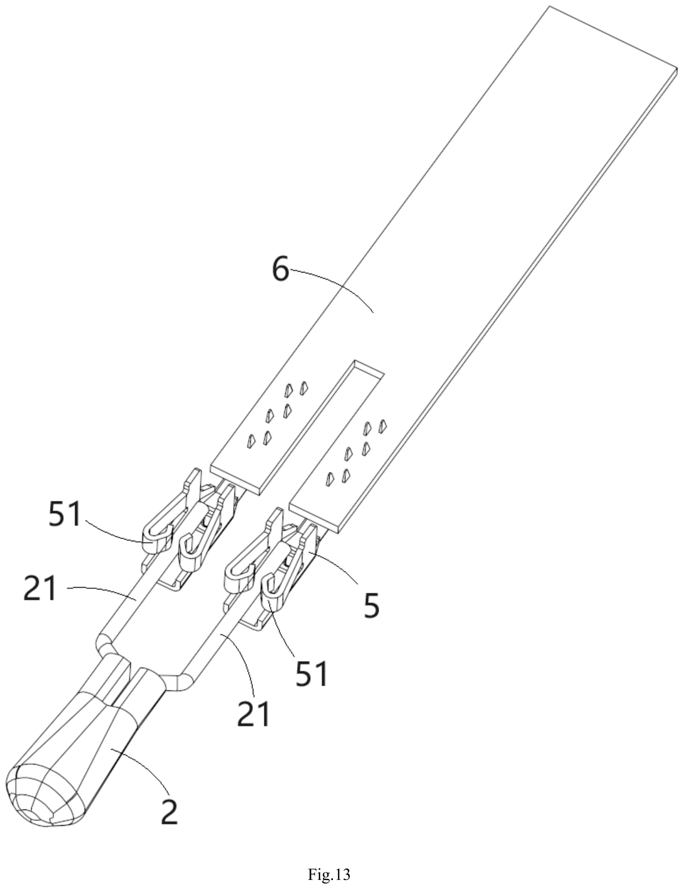

Figure 1 shows an illustrative perspective view of a temperature acquisition device according to an exemplary embodiment of the present invention; Figure 2 shows an illustrative exploded view of a temperature acquisition device according to an exemplary embodiment of the present invention; Figure 3 shows an illustrative perspective view of the temperature measurement module 100 of the temperature acquisition device according to an exemplary embodiment of the present invention; Figure 4 shows an illustrative exploded view of the temperature measurement module 100 of the temperature acquisition device according to an exemplary embodiment of the present invention; Figure 5 shows another illustrative exploded view of the temperature measurement module 100 of the temperature acquisition device according to an exemplary embodiment of the present invention; Figure 6 shows a longitudinal sectional view of the temperature measurement module 100 of the temperature acquisition device according to an exemplary embodiment of the present invention; Figure 7 shows an exploded sectional view of the temperature measurement module 100 of the temperature acquisition device according to an exemplary embodiment of the present invention; Figure 8 shows an illustrative perspective view of the electrical connection module 200 of the temperature acquisition device according to an exemplary embodiment of the present invention; Figure 9 shows an illustrative exploded view of the electrical connection module 200 of the temperature acquisition device according to an exemplary embodiment of the present invention; Figure 10 shows another illustrative exploded view of the electrical connection module 200 of the temperature acquisition device according to an exemplary embodiment of the present invention; Figure 11 shows another illustrative exploded view of the electrical connection module 200 of the temperature acquisition device according to an exemplary embodiment of the present invention; Figure 12 shows an illustrative perspective view of the terminal 5 and electrical connection member 6 of the electrical connection module 200 of the temperature acquisition device according to an exemplary embodiment of the present invention; Figure 13 shows an illustrative view of pin 21 of temperature sensor 2 being press fitted into terminal 5 according to an exemplary embodiment of the present invention.

As shown in Figures 1 to 13, in an exemplary embodiment of the present invention, a temperature measurement module is disclosed. The temperature measurement module includes: a housing 1 and a temperature sensor 2. The temperature sensor 2 is installed in the housing 1. The temperature sensor 2 has a pair of pins 21, which are used as mating terminals for mating with terminals 5 of an electrical connection module 200.

As shown in Figures 1 to 13, in the illustrated embodiment, the pair of pins 21 of the temperature sensor 2 are adapted to be press fitted into a pair of terminals 5 of the electrical connection module 200, respectively, to be electrically connected to the pair of terminals 5 of the electrical connection module 200.

As shown in Figures 1 to 13, in the illustrated embodiment, the temperature sensor 2 is a negative temperature coefficient thermistor temperature sensor, i.e., an NTC temperature sensor.

As shown in Figures 1 to 13, in the illustrated embodiment, the housing 1 has front and rear ends that are opposite in the longitudinal direction Y, and two sides that are opposite in the transverse direction X. The housing 1 has a transverse partition wall 13, which divides the inner cavity of the housing 1 into a front chamber 11 and a rear chamber 12. The main body 20 of the temperature sensor 2 is accommodated in the front chamber 11 of the housing 1. A pair of through holes 131 are formed in the transverse partition wall 13, and the pair of pins 21 of the temperature sensor 2 pass through the transverse partition wall 13 and extend into the rear chamber 12 of the housing 1 through the pair of through holes 131.

As shown in Figures 1 to 13, in the illustrated embodiment, a mounting port 101 is formed on the front wall of the housing 1, which is connected to the front chamber 11. The temperature sensor 2 is detachably installed into the housing 1 through the mounting port 101.

As shown in Figures 1 to 13, in the illustrated embodiment, the front chamber 11 of the housing 1 has a top opening and a bottom opening. The temperature measurement module 100 also includes an upper retaining body 31 and a lower retaining body 32. The upper retaining body 31 is detachably installed into the front chamber 11 of the housing 1 from the top opening of the front chamber 11. The lower retaining body 32 is detachably installed into the front chamber 11 of the housing 1 from the bottom opening of the front chamber 11. The main body 20 of temperature sensor 2 is held between the upper retaining body 31 and the lower retaining body 32. At least one of the upper retaining body 31 and the lower retaining body 32 is made of a thermal conductive material to be able to transfer the heat of a measured object to the temperature sensor 2.

As shown in Figures 1 to 13, in the illustrated embodiment, the upper retaining body 31 is made of a heat-conducting material, and the upper retaining body 31 protrudes slightly from the top of the housing 1, suitable for direct thermal contact with the measured object or being thermally connected to the measured object via a heat-conducting adhesive. The lower retaining body 32 is made of a thermally conductive material, which protrudes slightly from the bottom of the housing 1 and is suitable for direct thermal contact with the measured object or being thermally connected to the measured object via a thermally conductive adhesive.

As shown in Figure 1 to Figure 13, in the illustrated embodiment, an upper recess 31a that matches the upper part of the main body 20 of the temperature sensor 2 is formed on the bottom of the upper retaining body 31, and a lower recess 32a that matches the lower part of the main body 20 of the temperature sensor 2 is formed on the top of the lower retaining body 32. The upper recess 31a and the lower recess 32a are combined to form a receiving recess that matches the main body 20 of the temperature sensor 2, and the main body 20 of the temperature sensor 2 is accommodated and positioned in the receiving recess.

As shown in Figures 1 to 13, in the illustrated embodiment, upper and lower slots 11a and 11b are respectively formed on the two side walls of the front chamber 11 of the housing 1. Upper protrusions 3a are formed on both sides of the upper retaining body 31, and the upper protrusions 3a are engaged with the upper slots 11a to lock the upper retaining body 31 in the front chamber 11 of the housing 1. Lower protrusions 3b are formed on both sides of the lower retaining body 32, which are engaged with the lower slots 11b to lock the lower retaining body 32 in the front chamber 11 of the housing 1.

As shown in Figures 1 to 13, in the illustrated embodiment, the upper retaining body 31 and the lower retaining body 32 are the same and can be used interchangeably. This can reduce manufacturing costs and facilitate installation, as there is no need to distinguish between the upper retaining body 31 and the lower retaining body 32.

However, the present invention is not limited to the illustrated embodiment. For example, in another exemplary embodiment of the present invention, the temperature measurement module further comprises a thermal conductor, which is injection molded into the front chamber 11 of the housing 1, for holding the main body 20 of the temperature sensor 2 and transferring the heat of the measured object to the temperature sensor 2.

As shown in Figures 1 to 13, in the illustrated embodiment, snap slots 12a are respectively formed on both side walls of the rear chamber 12 of the housing 1. The snap slots 12a are used to engage with the elastic buckles 42 on the insulation shell 4 of the electrical connection module 200, in order to lock the insulation shell 4 of the electrical connection module 200 in the rear chamber 12 of the housing 1.

As shown in Figures 1 to 13, in the illustrated embodiment, the top portion and rear end of the rear chamber 12 of the housing 1 are open to allow the electrical connection module 200 to be press fitted downwards from the top of the rear chamber 12 of the housing 1 along the height direction Z of the housing 1 into the rear chamber 12 of the housing 1.

As shown in Figures 1 to 13, in another exemplary embodiment of the present invention, a temperature acquisition device is also disclosed. The temperature acquisition device includes a temperature measurement module 100 and an electrical connection module 200, with the electrical connection module 200 being press fitted into the temperature measurement module 100. The electrical connection module 200 includes an insulation shell 4, a pair of terminals 5, and an electrical connection member 6. The pair of terminals 5 are detachably installed in the insulation shell 4. The electrical connection member 6 is electrically connected to the pair of terminals 5 and leads out from the insulation shell 4 for transmitting detected temperature data. The pair of pins 21 of temperature sensor 2 are respectively press fitted into the pair of terminals 5 to be electrically connected to them.

As shown in Figures 1 to 13, in the illustrated embodiment, the terminal 5 has a pair of elastic cantilevers 51 located at its front end. The pin 21 of temperature sensor 2 is press fitted between the pair of elastic cantilevers 51 of terminal 5, and the pair of elastic cantilevers 51 clamp the pin 21 to be electrically connected to the pin 21.

As shown in Figures 1 to 13, in the illustrated embodiment, the terminal 5 has a crimping portion 52 located at its rear end, which is crimped onto the electrical connection member 6 for electrical connection.

As shown in Figures 1 to 13, in the illustrated embodiment, the electrical connection member 6 is a flexible flat cable or a flexible printed circuit board.

As shown in Figures 1 to 13, in the illustrated embodiment, two terminal mounting slots 41 are formed in the insulation shell 4 and the bottom of the insulation shell 4 is open to allow the pair of terminals 5 to be respectively installed into the two terminal mounting slots 41 from the bottom of the insulation shell 4.

As shown in Figures 1 to 13, in the illustrated embodiment, the electrical connection module 200 further includes a bottom cover 7, which is detachably mounted to the bottom of the insulation shell 4. The pair of slots 401 are formed on the front wall of the insulation shell 4 and the front end of the bottom cover 7 to allow the pair of pins 21 to enter the housing 1. The pair of pins 21 are respectively press fitted between the pair of elastic cantilevers 51 of the terminal 5 through the pair of slots 401.

As shown in Figures 1 to 13, in the illustrated embodiment, a locking slot 43 is formed on the top wall of the insulation shell 4, and the terminal 5 has a locking spring 53 that is engaged into the locking slot 43 to lock the terminal 5 in the insulation shell 4.

As shown in Figures 1 to 13, in the illustrated embodiment, the elastic cantilever 51 of terminal 5 has a hook shaped portion 51 located at its end, and the hook shaped portions 51 of the pair of elastic cantilevers 51 of the terminal 5 face each other for clamping the pin 21 inserted between them.

As shown in Figures 1 to 13, in the illustrated embodiment, the insulation shell 4 of the electrical connection module 200 is adapted to be press fitted along the height direction Z from above the rear chamber 12 of the housing 1 of the temperature measurement module 100 into the rear chamber 12 of the housing 1 of the temperature measurement module 100. Elastic buckles 42 are respectively formed on the two side walls of the insulation shell 4, and protrusions 42a are formed on the elastic buckles 42. The protrusions 42a are engaged with the slots 12a on the side walls of the rear chamber 12 of the housing 1 to lock the insulation shell 4 in the rear chamber 12 of the housing 1.

As shown in Figures 1 to 13, in the illustrated embodiment, the temperature measurement module 100 is used to detect the temperature of the electric vehicle battery pack, and the temperature acquisition device is used to collect temperature data of the electric vehicle battery pack. The temperature measurement module 100 is in direct thermal contact with the bus bar or top cover of the electric vehicle battery pack or is thermally connected to the bus bar or top cover of the electric vehicle battery pack through a thermal conductive adhesive.

It should be appreciated for those skilled in this art that the above embodiments are intended to be illustrated, and not restrictive. For example, many modifications may be made to the above embodiments by those skilled in this art, and various features described in different embodiments may be freely combined with each other without conflicting in configuration or principle.

Although several exemplary embodiments have been shown and described, it would be appreciated by those skilled in the art that various changes or modifications may be made in these embodiments without departing from the principles and spirit of the disclosure, the scope of which is defined in the claims and their equivalents.

As used herein, an element recited in the singular and proceeded with the word "a" or "an" should be understood as not excluding plural of said elements or steps, unless such exclusion is explicitly stated. Furthermore, references to "one embodiment" of the present invention are not intended to be interpreted as excluding the existence of additional embodiments that also incorporate the recited features. Moreover, unless explicitly stated to the contrary, embodiments "comprising" or "having" an element or a plurality of elements having a particular property may include additional such elements not having that property.

## Claims

1. A temperature measurement module, comprising:
a housing (1); and
a temperature sensor (2) which is provided in the housing (1),
wherein the temperature sensor (2) has a pair of pins (21), which are used as mating terminals for mating with terminals (5) of an electrical connection module (200).

2. The temperature measurement module according to claim 1,
wherein the pair of pins (21) of the temperature sensor (2) are adapted to be press fitted into a pair of terminals (5) of the electrical connection module (200), respectively, to be electrically connected to the pair of terminals (5) of the electrical connection module (200).

3. The temperature measurement module according to claim 1,
wherein the temperature sensor (2) is a negative temperature coefficient thermistor temperature sensor.

4. The temperature measurement module according to claim 1,
wherein the housing (1) has a transverse partition wall (13), which divides the inner cavity of the housing (1) into a front chamber (11) and a rear chamber (12), the main body (20) of the temperature sensor (2) is accommodated in the front chamber (11) of the housing (1);
wherein a pair of through holes (131) are formed in the transverse partition wall (13), and the pair of pins (21) of the temperature sensor (2) pass through the transverse partition wall (13) through the pair of through holes (131) and extend into the rear chamber (12) of the housing (1).

5. The temperature measurement module according to claim 4,
wherein a mounting port (101) connected to the front chamber (11) is formed in the front wall of the housing (1), and the temperature sensor (2) is detachably mounted into the housing (1) through the mounting port (101).

6. The temperature measurement module according to claim 4,
wherein the front chamber (11) of the housing (1) has a top opening and a bottom opening;
wherein the temperature measurement module (100) further comprises:
an upper retaining body (31) which is detachably installed into the front chamber (11) of the housing (1) from the top opening of the front chamber (11); and
a lower retaining body (32) which is detachably installed into the front chamber (11) of the housing (1) from the bottom opening of the front chamber (11),
wherein the main body (20) of the temperature sensor (2) is held between the upper retaining body (31) and the lower retaining body (32),
wherein at least one of the upper retaining body (31) and the lower retaining body (32) is made of a thermal conductive material to be able to transfer the heat of a measured object to the temperature sensor (2).

7. The temperature measurement module according to claim 6,
wherein the upper retaining body (31) is made of a thermally conductive material, which protrudes slightly from the top of the housing (1) and is suitable for direct thermal contact with the measured object or thermal connection to the measured object via a thermally conductive adhesive; and/or
wherein the lower retaining body (32) is made of a thermally conductive material, which protrudes slightly from the bottom of the housing (1) and is suitable for direct thermal contact with the measured object or thermal connection to the measured object via a thermally conductive adhesive.

8. The temperature measurement module according to claim 6,
wherein an upper recess (31a) that matches the upper part of the main body (20) of the temperature sensor (2) is formed on the bottom of the upper retaining body (31), and a lower recess (32a) that matches the lower part of the main body (20) of the temperature sensor (2) is formed on the top of the lower retaining body (32);
wherein the upper recess (31a) and the lower recess (32a) are combined to form a receiving recess that matches the main body (20) of the temperature sensor (2), and the main body (20) of the temperature sensor (2) is received and positioned in the receiving recess.

9. The temperature measurement module according to claim 6,
wherein an upper snap slot (11a) and a lower snap slot (11b) are respectively formed on two side walls of the front chamber (11) of the housing (1);
wherein upper protrusions (3a) are respectively formed on both sides of the upper retaining body (31), and the upper protrusions (3a) are engaged with the upper snap slots (11a) to lock the upper retaining body (31) in the front chamber (11) of the housing (1);
wherein lower protrusions (3b) are respectively formed on both sides of the lower retaining body (32), and the lower protrusions (3b) are engaged with the lower slots (11b) to lock the lower retaining body (32) in the front chamber (11) of the housing (1).

10. The temperature measurement module according to claim 6,
wherein the upper retaining body (31) and the lower retaining body (32) are the same and can be used interchangeably.

11. The temperature measurement module according to claim 4, further comprising:
a thermal conductor which is injected into the front chamber (11) of the housing (1) to maintain the main body (20) of the temperature sensor (2) and transfer the heat of the measured object to the temperature sensor (2).

12. The temperature measurement module according to claim 4,
wherein snap slots (12a) are respectively formed on both side walls of the rear chamber (12) of the housing (1), the snap slots (12a) are used to engage with elastic buckles (42) on an insulation shell (4) of an electrical connection module (200) to lock the insulation shell (4) of the electrical connection module (200) in the rear chamber (12) of the housing (1).

13. The temperature measurement module according to claim 4,
wherein the top portion and rear end of the rear chamber (12) of the housing (1) are open to allow the electrical connection module (200) to be press fitted into the rear chamber (12) of the housing (1) from the top portion of the rear chamber (12) of the housing (1) downwards along the height direction (Z) of the housing (1).

14. A temperature acquisition device, comprising:
the temperature measurement module (100) according to any one of claims 1-13; and
an electrical connection module (200) which is press fitted into the temperature measurement module (100),
wherein the electrical connection module (200) comprises:
an insulation shell (4);
a pair of terminals (5) which are detachably installed in the insulation shell (4); and
an electrical connection member (6) electrically connected to the pair of terminals (5) and led out from the insulation shell (4),
wherein the pair of pins (21) of the temperature sensor (2) are respectively press fitted into the pair of terminals (5) to be electrically connected to the pair of terminals (5).

15. The temperature acquisition device according to claim 14,
wherein the terminal (5) has a pair of elastic cantilevers (51) located at its front end, and the pin (21) of the temperature sensor (2) is press fitted between the pair of elastic cantilevers (51) of the terminal (5), the pair of elastic cantilevers (51) clamp the pin (21) to be electrically connected to it.

16. The temperature acquisition device according to claim 14,
wherein the terminal (5) has a crimping portion (52) located at its rear end, which is crimped onto the electrical connection member (6) to electrically connect with the electrical connection member (6).

17. The temperature acquisition device according to claim 14,
wherein the electrical connection member (6) is a flexible flat cable or a flexible printed circuit board.

18. The temperature acquisition device according to claim 15,
wherein two terminal mounting slots (41) are formed in the insulation shell (4) and the bottom of the insulation shell (4) is open to allow the pair of terminals (5) to be respectively installed into the two terminal mounting slots (41) from the bottom of the insulation shell (4).

19. The temperature acquisition device according to claim 18,
wherein the electrical connection module (200) further comprises:
a bottom cover (7) which is detachably installed on the bottom of the insulation shell (4),
wherein a pair of slots (401) are formed in the front wall of the insulation shell (4) and the front end of the bottom cover (7) to allow the pair of pins (21) to enter the housing (1), and the pair of pins (21) are respectively press fitted between the pair of elastic cantilevers (51) of the terminal (5) through the pair of slots (401).

20. The temperature acquisition device according to claim 18,
wherein a locking slot (43) is formed on the top wall of the insulation shell (4), and the terminal (5) has a locking spring (53) that is engaged into the locking slot (43) to lock the terminal (5) in the insulation shell (4).

21. The temperature acquisition device according to claim 15,
wherein the elastic cantilever (51) of the terminal (5) has a hook shaped portion (51) located at its end, and the hook shaped portions (51) of the pair of elastic cantilevers (51) of the terminal (5) face each other for clamping the pin (21) inserted between them.

22. The temperature acquisition device according to claim 14,
wherein the insulation shell (4) of the electrical connection module (200) is adapted to be press fitted along the height direction (Z) from above the rear chamber (12) of the housing (1) of the temperature measurement module (100) into the rear chamber (12) of the housing (1) of the temperature measurement module (100);
wherein elastic buckles (42) are respectively formed on the two side walls of the insulation shell (4), and protrusions (42a) are respectively formed on the elastic buckles (42), the protrusions (42a) are respectively engaged with the snap slots (12a) on the side walls of the rear chamber (12) of the housing (1) to lock the insulation shell (4) in the rear chamber (12) of the housing (1).

23. The temperature acquisition device according to any one of claims 14-22,
wherein the temperature measurement module (100) is used to detect the temperature of an electric vehicle battery pack, and the temperature acquisition device is used to collect temperature data of the electric vehicle battery pack,
wherein the temperature measurement module (100) is in direct thermal contact with the bus bar or top cover of the electric vehicle battery pack or is thermally connected to the bus bar or top cover of the electric vehicle battery pack through a thermal conductive adhesive.
